## Europäisches Patentamt
### European Patent Office
### Office européen des brevets

(19)

(11) Veröffentlichungsnummer: **0 012 439**
A1

(12) **EUROPÄISCHE PATENTANMELDUNG**

(21) Anmeldenummer: **79105158.4**

(22) Anmeldetag: **13.12.79**

(51) Int. Cl.³: **G 02 F 1/21, H 01 S 3/10**

(30) Priorität: **13.12.78 HU MA003071**
**06.12.79 HU MA003071**

(43) Veröffentlichungstag der Anmeldung: **25.06.80**
**Patentblatt 80/13**

(84) Benannte Vertragsstaaten: **AT BE CH DE FR GB IT LU NL SE**

(71) Anmelder: **MTA KZPONTI FIZIKAI KUTATO INTEZETE, Konkoly Thege ut, 1121 Budapest (HU)**

(72) Erfinder: **Kertész, Ivn, Költo utca 2-4, 1121 Budapest (HU)**
Erfinder: **Lutter, Andrs, Radnoti Miklos, ut 17, 1137 Budapest (HU)**

(74) Vertreter: **von Füner, Alexander, Dr. et al, Patentanwälte Schiff, von Füner Strehl, Schübel-Hopf, Ebbinghaus, Finck Mariahilfplatz 2 u. 3, D-8000 München 90 (DE)**

(54) **Lichtmodulator oder Lichtschalter mit veränderbarer Durchlässigkeit und Verfahren zur Herstellung desselben.**

(57) Ein Lichtmodulator oder Lichtschalter mit veränderbarer Durchlässigkeit, welcher zwei aus Dielektrikum-Schichten mit mindestens zweierlei Brechungsindizes bestehende Spiegel (3, 5) und zwischen den beiden einen Aktivstoff (4) enthält, wobei zwei stromleitende Schichten (2, 6) — zu jedem Spiegel eine — vorgesehen sind, und die Durchlässigkeit der Vorrichtung durch Niederspannung verändert werden kann.

Der Lichtmodulator oder Lichtschalter wird mindestens zum Teil auf vakuumtechnischem Wege hergestellt.

EP 0 012 439 A1

EPA-19843

# LICHTMODULATOR ODER LICHTSCHALTER MIT VERÄNDERBARER DURCHLÄSSIGKEIT UND VERFAHREN ZUR HERSTELLUNG DESSELBEN

Die Erfindung betrifft einen Lichtmodulator oder Lichtschalter mit veränderbarer Durchlässigkeit, sowie ein Verfahren zur Herstellung desselben.

Solche Lösungen werden (zur sogenannten Q-Schaltung zur inneren Modulierung) von Lasern, bzw. zur Modulierung des Laserlichtes und des natürlichen monochromatischen Lichtes verwendet.

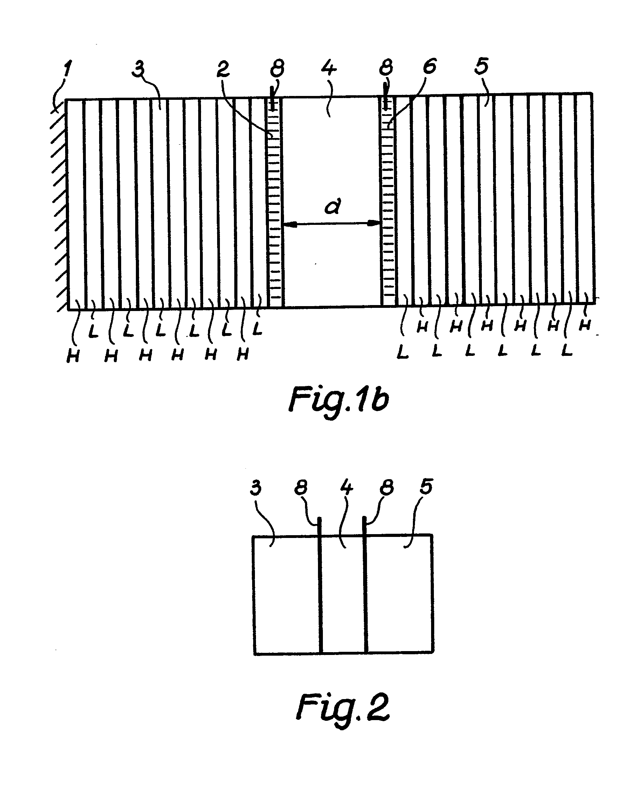

Die am meisten verbreiteten Modulatoren sind aus den folgenden optischen Elementen aufgebaut, wie dies aus der Figur 2 bis 20 auf Seite 58 des Buches "Optical Lasers in Electronics" (Earl L. Steele, Verlag: Hohn Wiley and Sons, Inc. New York, 1968) eindeutig hervorgeht: aus einem Polarisator mit vertikaler Achse, aus einem elektrooptischen Modulator und einem Polarisator mit horizontaler Achse.

Im allgemeinen beanspruchen diese bekannten elektrooptischen Lichtmodulatoren eine Spannung von mehreren kV. Ihre Funktion beruht auf dem Prinzip, daß unter dem Einfluß eines elektrischen Feldes die Polarisationsebene verdreht wird, wobei diese Verdrehung mit Hilfe eines weiteren Polarisator-Analysators in eine Intensitätsänderung umgewandelt werden kann. Dementsprechend findet bei diesen Lösungen nur die Modulation bzw. die Schaltung eines polarisierten Lichtes statt. Es gibt zwar Kristalle, bei welchen die Spannung von mehreren kV unnötig ist, die Herstellung derselben in der gewünschten Reinheit und Abmessung ist jedoch äußerst kompliziert und teuer, oder erleiden sie leicht auf Wirkung einer höheren Intensität eine Beschädigung.

Auch piezoelektrische Schalter, die ebenfalls im kV-Bereich liegende Spannungen benötigen, schalten bzw. modulieren alternierend zwischen Totalreflexions- und Transmissionszuständen.

Der Erfindung wurde das Ziel gesetzt, einen Lichtmodulator oder Lichtschalter mit veränderbarer Durchlässigkeit zu entwickeln, welcher mit einer niedrigen Spannung gesteuert werden kann, dessen Herstellung auf vakuumtechnischem Wege möglich ist, gleichzeitig den Laserspiegel und den Modulator vereinigt, in kleinen geometrischen Dimensionen hergestellt werden kann und sich aus der Gestaltung ergebend beliebig innerhalb des Lasers oder außerhalb desselben angeordnet werden kann.

Die Erfindung beruht auf der Erkenntnis, daß wenn zwischen zwei auf bekannte Weise hergestellten Spiegeln irgendwelches Material eingesetzt wird, das auf Einwirkung einer elektrischen Spannung seine optische Dicke verändert, ein Spiegel mit veränderbarer Durchlässigkeit erhalten werden kann.

Die erfindungsgemäße Lösung beruht auf dem Prinzip, daß die Durchlässigkeit bzw. das Reflexionsvermögen des aus zwei parallelen Spiegeln bestehenden Fabry-Perot-Systems in der Abhängigkeit der optischen Distanz der Spiegel geändert werden. Falls für die zwischen den beiden Spiegeln vorhandene Füllschicht (spacer) ein - zweckmäßig fester - lichtdurchlässiger Stoff mit elektrooptischem oder piezo-

- 3 -

elektrischem Effekt gewählt wird, die Lichtdurchlässigkeit bzw. das Reflexionsvermögen des Systems – in der Abhängigkeit des Materials – mit einer niedrigen Spannung zwischen weiten Grenzen verändert werden kann, wobei die sich äußerst steil ändernde Lichtdurchlaßeigenschaft eines Interferenzfilters ausgenützt wird.

Die bei dem genannten Lichtmodulator oder Lichtschalter verwendeten beiden Spiegel, die zwischen den Spiegeln vorhandene, als Aktivstoff sich verhaltende – elektrooptische Füllschicht, sowie die das entsprechende elektrische Feld sicherstellenden lichtdurchlässigen Elektroden können ein organisches Ganzes bilden, wodurch ein mit niedriger Spannung und hoher Wiederholungsfrequenz steuerbarer Lichtmodulator bzw. ein Lichtschalter erhalten werden kann. Der derweise erhaltene Lichtmodulator bzw. Lichtschalter ist zur Änderung der Intensität eines Laserlichtes bzw. eines Lichtes, dessen Bandbreite einige Angström nicht überschreitet, zwischen den Grenzen von O und 100 % geeignet.

Ein solches Kristallmaterial kann z.B. das $LiNbO_3$ oder Lithiumjodat sein. Der seine optische Dicke ändernde Stoff kann auf vakuumtechnischem Weg, z.B. unter Anwendung von GaAs, ZnS hergestellt werden. Dieser Aktivstoff kann erst dann seine Funktion erfüllen, wenn die beiden die Schicht umschließenden Spiegel auch mit durchsichtigen stromleitenden Flächen versehen sind. Die erwähnten durchsichtigen stromleitenden Schichten können entweder unmittelbar an beiden Seiten der aktiven Schicht angeordnet werden, oder als eine äußere Grenzschicht der beiden die aktive Schicht umschließenden Spiegel ausgestaltet werden.

Falls das Reflexionsvermögen der die Füllschicht (spacer) umschließenden Spiegel ein verhältnismäßig breites Reflexionsband von mehreren Hunderten Angström aufweist, kann der Verwendungsbereich des Modulators innerhalb des der Bandbreite der Spiegel entsprechenden Bereiches derart geändert werden, daß die optische Dicke der Füllschicht mit einer Gleichspannung geändert wird.

Bei dem beschriebenen Mittel kann die Abhängigkeit der Durchlässigkeit von dem Brechungsindex, bei dem Halbwert des Durchlaßbandes mit Hilfe der unten angeführten Beziehung beschrieben werden:

$$\Delta T = \frac{16}{\pi} \cdot F^2 \cdot m \cdot \Delta n \ldots (1)$$

wo $\Delta T$ die Änderung der Durchlässigkeit auf Wirkung der Brechungsindexänderung $\Delta n$ für die m-te Harmonische der $\lambda_o = 2d$ bei einem Fabry-Pero-System mit Finesse F bedeutet. Bei einem genügend hohen Finesse-Wert ist also eine äußerst geringe Änderung des Brechungsindexes zur Erreichung einer bedeutenden Änderung der Durchlässigkeit genügend. Weil auf vakuumtechnischem Wege auf einem geeigneten Träger Spiegel mit hohem Reflexionsvermögen hergestellt werden können, besteht kein Hindernis, eine Finesse von sogar $F \sim 100$ bei der gewünschten Wellenlänge erreichen zu können.

Auf diese Weise kann sogar eine recht dünne Monokristall-platte, z.B. aus $LiNbO_5$ - oder einem anderen elektrooptisch aktiven planparallelen Plättchen mit zwei Spiegeln zusammengebaut werden, oder es kann die zwischen den Spiegeln vorhandene elektrooptische Schicht unter Anwendung einer vakuumtechnischen Methode, z.B. durch Verdampfung (gleicherweise, wie die Elektroden) gefertigt werden. In diesem Fall stellt das erfindungsgemäße Verfahren eine ideal homogene Technologie dar.

Der Gegenstand der Erfindung bezieht sich daher auf einen Lichtmodulator oder Lichtschalter mit veränderbarer Durchlässigkeit, welcher zwei aus Dielektrikum-Schichten bestehende, kohärent geschaltete Spiegel, sowie einen zwischen den beiden Spiegeln angeordneten Aktivstoff enthält. Mindestens der eine der beiden Spiegel weist einen Tragstoff auf, und die Spiegel sind aus mindestens zweierlei Schichten mit verschiedenem Material und mit verschiedenen Brechungsindizes, in einer Dicke von $\lambda/4$, oder in einer dem ungeraden Vielfachen von $\lambda/4$ entsprechenden Dicke aufgebaut, wobei der Aktivstoff in einer Dicke von $\lambda/2$ oder in einer dem Vielfachen von $\lambda/2$ entsprechenden Dicke ausgebildet ist, wobei zu jedem Spiegel je eine mit Zuleitungen versehene stromleitende Schicht vorgesehen ist, von denen mindestens die eine durchsichtig ist. Im Falle nur einer durchsichtigen leitenden Schicht ist die undurchsichtige leitende Schicht am Tragstoff des einen Spiegels und die andere durchsichtige leitende Schicht am Tragstoff des anderen Spiegels oder an der Grenzfläche des anderen Spiegels und des Aktivstoffes angeordnet. Wenn beide leitenden Schichten durchsichtig sind, sind die beiden durchsichtigen leitenden Schichten an den mit dem Aktivstoff gemeinsamen Innenseiten der beiden Spiegel angeordnet, wobei $\lambda$ die Wellenlänge des zu schaltenden oder zu modulierenden Lichtes bedeutet.

Gegenstand der Erfindung ist auch das Verfahren zur Herstellung des erfindungsgemäßen Lichtmodulators oder Lichtschalters, gemäß welchem der Lichtmodulator oder Lichtschalter, welcher aus zwei gleich ausgestalteten Spiegeln mit stromleitender Schicht und einem Aktivstoff derart hergestellt wird, daß auf eine Tragschicht eine lichtdurchlässige oder -undurchlässige leitende Schicht, z.B. aus Indiumoxid - $In_2O_3$ - aufgetragen wird; darauffolgend werden auf die erwähnte leitende Schicht mindestens zweierlei durchsichtige Stoffe mit verschiedenen Brechungsindizes alternierend auf vakuumtechnischem Wege in einer Dicke von $\lambda/4$ oder in einer dem ungeraden Vielfachen von $\lambda/4$ entsprechenden Dicke solange aufgetragen, bis das gewünschte Reflexionsvermögen erreicht wird; demnach wird der Aktivstoff, dessen Dicke $\lambda/2$ oder ein Vielfaches von $\lambda/2$ beträgt, durch Aufkleben oder auf vakuumtechnischem Wege hergestellt, und nachher wird der andere Spiegel an den Aktivstoff angeklebt, oder in der im Zusammenhang mit der Herstellung des ersten Spiegels beschriebenen Weise, auf vakuumtechnischem Wege kontinuierlich ausgebildet, und auf die Abschlußfläche des durch Verdampfen ausgestalteten Spiegels eine zweite durchsichtige leitende Schicht aufgetragen.

Weitere Einzelheiten des Erfindungsgegenstandes werden anhand einer beispielsweisen Ausführung aufgrund von Zeichnungen näher erläutert.

In der Zeichnung zeigen:

Fig. 1 eine Ausgestaltung des erfindungsgemäßen Lichtmodulators oder Lichtschalters,

Fig. 1a und 1b zwei weitere Varianten der Lösung nach Fig. 1 und

Fig. 2 in vereinfachter Darstellung eine Ausführungsform des Erfindungsgegenstandes.

Wie aus den Figuren ersichtlich, enthält der erfindungsgemäße Lichtmodulator oder Lichtschalter entweder einen Tragstoff, der undurchsichtig sein kann, oder zwei Tragstoffe 1 und 7, von welchen der zweite für das Licht durchlässig sein muß.

Außerdem sind zwei Spiegel 3 und 5 aus Dielektrikum-Material vorgesehen, wobei jedem Spiegel 3 und 5 je eine durchsichtige elektrisch leitende Schicht 2 bzw. 6 mit zugehörigen Zuführungen 8 zugeordnet sind. Zwischen den beiden Spiegeln 3 und 5 ist eine sich als Aktivstoff 4 verhaltende Füllschicht vorgesehen.

Auf den durchsichtigen Tragstoff 1, 7 von guter Qualität
– der z.B. Quarz oder eine Glasplatte sein kann – wird auf
vakuumtechnischem Wege die durchsichtige leitende Schicht
2, z.B. Indiumoxid – $In_2O_3$ – aufgetragen; darauffolgend
werden auf die erwähnte durchsichtige leitende Schicht im
allgemeinen zweierlei durchsichtige Stoffe H und L mit verschiedenen Brechungsindizes alternierend, auf vakuumtechnischem Weg aufgetragen. Der eine Stoff kann z.B. Titandioxid – $TiO_2$ – oder Zinksulfid – ZnS – sein, der andere z.B.
Siliziumdioxid – $SiO_2$ –. Diese Materialien werden alternierend, in einer Dicke von $\lambda/4$ oder in einer einem ungeraden Vielfachen von $\lambda/4$ entsprechenden Dicke solange aufgetragen, bis das gewünschte Reflexionsvermögen des Spiegels 3 erreicht wird ($\lambda$ bedeutet die Wellenlänge des zu
schaltenden oder zu modulierenden Lichtes). Demnach wird
der Aktivstoff 4 entweder Lithiumniobat – $LiNbO_3$ – oder
Lithiumjodat – $LiJO_3$ – durch Aufkleben aufgetragen, oder es
kann der Aktivstoff auch auf einem vakuumtechnischen Weg
hergestellt werden, indem z.B. Zinksulfid – ZnS – oder Galliumarsenid – GaAs – in einer Dicke von $\lambda/2$, oder in
einer vorteilhaft dem Vielfachen von $\lambda/2$ entsprechenden
Dicke aufgetragen wird. Darauffolgend wird der andere Spiegel 5 an den Aktivstoff 4 angeklebt, oder durch Verdampfen
– auf im Zusammenhang mit dem Spiegel 3 beschriebene Weise –
ausgestaltet. Auf die Grenzfläche des durch Verdampfen ausgestalteten Spiegels wird eine zweite durchsichtige leitende Schicht 6 aufgetragen.

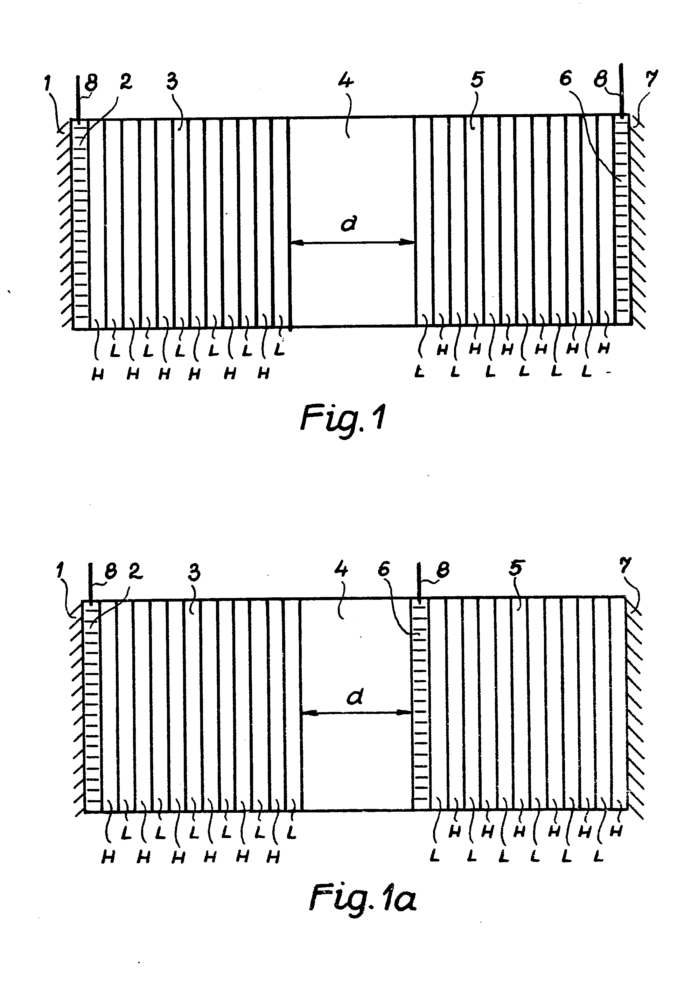

Bei einer Version des erfindungsgemäßen Verfahrens wird die
durchsichtige leitende Schicht auf die beiden Seiten des
Aktivstoffes 4 aufgetragen (Fig. 1b, Fig. 2).

Die Vorteile des nach dem erfindungsgemäßen Verfahren hergestellten Lichtmodulators oder Lichtschalters mit veränderlicher Durchlässigkeit können wie folgt zusammengefaßt

0012439

werden:

Der erfindungsgemäße Lichtmodulator oder Lichtschalter kann mit einer niedrigen Spannung, mit hoher Geschwindigkeit in Betrieb gehalten werden, des weiteren kann er mit viel einfacheren elektronischen Schaltungen als die bekannten elektrooptischen Schalter und Modulatoren betrieben werden.

Ein weiterer Vorteil besteht darin, daß der Lichtmodulator oder Lichtschalter eine hohe mechanische Stabilität aufweist und dabei keine mechanische Nachstellung beansprucht.

Infolge des einfacheren Aufbaus wird eine vielfach vereinfachte Laserkonstruktion ermöglicht, wobei das Mittel zur Schaltung bzw. Modulierung von hohen Laser-Leistungen zerstörungsfrei verwendet werden kann. Die einfachere Steuerungsmöglichkeit und der geringe Raumbedarf dieser Einrichtungen ermöglichen, daß sie - anstatt des instabilen passiven Q-Schalters der tragbaren Apparate, z.B. Laserfernmeßgeräte - mit erhöhter Betriebssicherheit und verlängerter Lebensdauer eingesetzt werden können.

Wie bereits erwähnt, wird auf den ausgewählten - z.B. aus Glas gefertigten - Träger 1 die durchsichtige stromleitende Dünnschicht 2 (die Elektrode) aufgetragen. Zu diesem Zwecke sind $In_2O_3$, $SnO_3$ usw. gut geeignet. Darauffolgend wird der erste Spiegel 3 durch Vakuumzerstäubung oder Vakuumverdampfung hergestellt. Im Laufe der Herstellung der Spiegel werden die Stoffe H, L mit unterschiedlichen Brechungsindizes alternierend auf den Träger 1 aufgetragen. Mit dem dielektrischen System, welches aus den bei den gewünschten Wellenlängen durchsichtigen, in einer geeigneten Dicke - zweckmäßig $\lambda/4$ -, auf in der ungarischen Patentschrift 171 794 beschriebene Weise aufgetragenen Schichten besteht, kann bei einer einander verstärkenden Interferenz der sich auf den Grenzflächen der einzelnen Schichten reflektierenden Lichtbündel ein Spiegel mit dem gewünschten Reflexionsvermögen hergestellt werden. Die Voraussetzung zu einer sich verstärkenden Interferenz besteht darin, daß die optische Dicke der einzelnen Schicht genau einem Viertel (eventuell einem ungeraden Vielfachen eines Viertels) der Wellenlänge gleich ist. Die Dicke kann durch ständige Messung der Reflexion oder mittels der sogenannten Schwingungsquarzmethode kontrolliert werden. Auf den ersten Spiegel 3 wird die optische aktive Dünnschicht 4 (oder planparallele Platte) entweder durch Aufkleben oder optische Anpassung oder Verdampfung aufgetragen. Nachher wird der zweite Spiegel 5 aufgesetzt und nach erfolgtem Auftragen der nächsten durchsichtigen stromleitenden Schicht 6 ist das Verfahren beendet. Der Aufbau eines beschriebenen Mittels ist in Figur 1 zu sehen. Die aktive Schicht 4 (z.B. die Monokristallplatte $LiNbO_3$) kann auch zwischen den auf zwei separate Träger 1 und 7 aufgetragenen Stromleitern 2, 6 und Spiegelschichten 3, 5 aufgetragen werden. Die Reihenfolge der leitenden Schichten 2, 6 und der Spiegel 3, 5 kann untereinander ausgestauscht werden. In diesem Falle (Fig. 1a und Fig. 2) müssen die Schichten 2, 6 durchsichtig sein.

Das beschriebene Spiegelsystem kann z.B. durch Vakuumverdampfung von $SiO_2$ und $Ti_1O_2$ in Sauerstoffatmosphäre hergestellt werden. Das elektrooptische Material kann unter anderem ein Material mit hohem Brechungsindex sein: in unserem Fall $TiO_2$ oder z.B. die bereits erwähnte $LiNbO_3$-Platte. Zweckmäßig wird das Reflexionsvermögen der Spiegel auf mindestens 98 % erhöht, wobei die Dicke des aktiven Stoffes zu (10 : $\lambda$ /2) gewählt wird, wodurch eine geringe Änderung bei dem Brechungsindex des Aktivstoffes einen hohen Effekt mit sich bringt.

Nach Gleichung (1) kann der Modulationseffekt entweder mittels der erwähnten Parameter oder durch geeignete Wahl des Aktivstoffes innerhalb breiter Grenzen geändert werden.

- 10 - 0012439

Der derart hergestellte, teilweise oder vollkommen auf vakuumtechnischem Wege gefertigte Lichtmodulator oder Lichtschalter beansprucht keinerlei Nachstellung und gleichzeitig ist seine mechanische Stabilität hoch.

Die niedrige Spannung und hohe Wiederholungsfrequenz ermöglichen die Fertigung eines Modulators bzw. Schaltungselements, das mit einer viel anspruchsloseren Elektronik betrieben werden kann, als die bei den bekannten elektrooptischen und piezoelektrischen Schaltern verwendete Elektronik.

Der Vorteil des Verfahrens liegt weiterhin darin, daß bei einem geringen Kostenaufwand (die Hälfte bis ein Viertel des Preises der herkömmlichen Mittel) große Serien hergestellt werden können.

Das Mittel, welches den Laserspiegel und den sogenannten Q-Schalter integriert, bietet die Möglichkeit zur Entwicklung einer viel einfacheren Laserkonstruktion und ist zur Schaltung von hohen Leistungen (zur Modulierung) ohne Beschädigung geeignet. Die einfache Weise der Steuerung und der geringe Raumbedarf bieten die Möglichkeit dazu, anstatt des instabilen passiven Q-Schalters der tragbaren Apparate (z.B. Laserfernmesser) einen Apparat mit höherer Betriebssicherheit und verlängerter Lebensdauer entwickeln zu können. Gleicherweise ist der Schaltspiegel zu der Q-Schaltung von Hochleistungs-$CO_2$-Laser - z.B. unter Anwendung von GaAs und ZnSe - bestens geeignet. Weiterhin besteht die Möglichkeit zur Q-Schaltung von Niederleistungslasern, ohne einen ständigen Verlust in den Laserresonator einführen zu müssen.

Patentansprüche

1. Lichtmodulator oder Lichtschalter mit veränderbarer Durchlässigkeit, d a d u r c h   g e k e n n z e i c h - n e t , daß derselbe zwei aus Dielektrikum-Schichten bestehende, kohärent geschaltete Spiegel (3, 5), sowie einen zwischen den beiden Spiegeln (3, 5) angeordneten Aktivstoff (4) enthält, daß mindestens der eine der beiden Spiegel einen Tragstoff (1, 7) aufweist, und die Spiegel (3, 5) aus mindestens zweierlei Schichten (H, L) mit verschiedenem Material und mit verschiedenen Brechungsindizes, in einer Dicke von $\lambda/4$, oder in einer dem ungeraden Viel- fachen von $\lambda/4$ entsprechenden Dicke aufgebaut sind, wobei der Aktivstoff (4) in einer Dicke von $\lambda/2$, oder in einer dem Vielfachen von $\lambda/2$ entsprechenden Dicke (d) ausgebildet ist, wobei zu jedem Spiegel (3, 5) je eine mit Zuleitungen (8) versehene stromleitende Schicht (2, 6) vorgesehen ist, von denen mindestens die eine durchsichtig ist, daß im Falle nur einer durchsichtigen leitenden Schicht die undurchsichtige leitende Schicht (2) am Tragstoff (1) des einen Spiegels (3) und die andere durchsichtige leitende Schicht (6) am Tragstoff (7) des anderen Spiegels (5) oder an der Grenzfläche des anderen Spiegels (5) und des Aktivstoffes (4) angeordnet ist, und daß, wenn beide leitende Schichten (2, 6) durchsichtig sind, die beiden durchsichtigen leitenden Schichten (2, 6) an den mit dem Aktivstoff (4) gemeinsamen Innenseiten der beiden Spiegel (3, 5) angeordnet sind, wobei $\lambda$ die Wellenlänge des zu schaltenden oder zu modulierenden Lichtes bedeutet.

2. Verfahren zur Herstellung eines Lichtmodulators oder Lichtschalters, d a d u r c h   g e k e n n z e i c h - n e t , daß der Lichtmodulator oder Lichtschalter aus zwei gleich ausgestalteten Spiegeln (3, 5) mit stromleitender Schicht (2, 6) und einem Aktivstoff (4) derart hergestellt wird, daß auf eine Tragschicht (1) eine lichtdurchlässige oder -undurchlässige leitende Schicht, z.B. aus Indiumoxid - $In_2O_3$ - aufgetragen wird, daß darauffol-gend auf die erwähnte leitende Schicht mindestens zweierlei durchsichtige Stoffe (H, L) mit verschiedenen Brechungsindizes alternierend auf vakuumtechnischem Weg in einer Dicke von $\lambda/4$ oder in einer dem ungeraden Vielfa-chen von $\lambda/4$ entsprechenden Dicke solange aufgetragen werden, bis das gewünschte Reflexionsvermögen erreicht wird, daß danach der Aktivstoff (4), dessen Dicke (d) $\lambda/2$ oder ein Vielfaches von $\lambda/2$ beträgt, durch Aufkle-ben oder auf vakuumtechnischem Wege hergestellt wird, und daß danach der andere Spiegel (5) an dem Aktivstoff (4) angeklebt oder in der im Zusammenhang mit der Herstellung des ersten Spiegels (3) beschriebenen Weise auf vakuumtechnischem Wege kontinuierlich ausgebildet und auf die Abschlußfläche des durch Verdampfen ausgestalteten Spiegels eine zweite durchsichtige leitende Schicht (6) aufgetragen wird.

3. Verfahren nach Anspruch 2, d a d u r c h   g e - k e n n z e i c h n e t , daß nur an der einen Seite des Lichtmodulators oder des Lichtschalters der Trägerstoff (1) und die an demselben ausgebildete leitende Schicht (2) aus undurchsichtigem Material bestehen, wobei alle übrigen Teile aus lichtdurchlässigen Materialien hergestellt werden.

4. Verfahren nach Anspruch 2 oder 3, d a d u r c h g e k e n n z e i c h n e t , daß die Reihenfolge der leitenden Schicht und des Spiegels (2 und 3 bzw. 5 und 6) im Laufe der Erzeugung austauschbar sind.

5. Verfahren nach Anspruch 2 bis 4, d a d u r c h g e k e n n z e i c h n e t , daß an beiden Seiten des

- 13 - 0012439

Aktivstoffes je eine lichtdurchlässige Schicht ausgebildet wird.

0012439

EPA-19843

Fig.1

Fig.1a

EPA-19843

**Fig.1b**

**Fig.2**

Europäisches
Patentamt

# EUROPÄISCHER RECHERCHENBERICHT

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | GB - A - 1 172 852 (THE PLESSEIJ COMP.) <br><br> * Seite 1, Zeilen 28-76; Seite 2, Zeilen 18-106; Figur 1 * <br><br> -- | 1-5 | G 02 F 1/21 <br> H 01 S 3/10 |
| X | DE - A - 2 252 889 (HITACHI) <br><br> * Seite 4; Seite 7, Absatz 1; Seite 10; Ansprüche 1,3-5; Figuren 2,5 * <br><br> -- | 1-5 | |
| | APPLIED OPTICS, Band 13, Nr. 11, November 1974, New York, US, Y. ITO: "Light modulation with multilayer thin films", Seiten 2464-2465 <br><br> * Seite 2464 * <br><br> -- | 1,2,4, 5 | RECHERCHIERTE SACHGEBIETE (Int. Cl. 3) <br><br> G 02 F 1/21 <br> H 01 S 3/10 |
| | US - A - 3 666 351 (YOH-HAN PAO) <br><br> * Spalte 1, Zeilen 15-43; Spalte 6, Zeilen 25-40; Spalte 7, Zeilen 60-66; Figur 1 * <br><br> -- | 1,2,5 | |
| | JAPANESE JOURNAL OF APPLIED PHYSICS, Band 15, Nr. 8, August '76 Tokyo, JP, H. TAKEUCHI et al.: "Optical interference in a thin plate of transparent magnetic material", Seiten 1601-1602 <br><br> * Seite 1601; Figur 1 * <br><br> ---- | 1,2,5 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-03-1980 | |

EPA form 1503.1   06.78